# EUROPEAN PATENT APPLICATION

(11) **EP 4 624 681 A1**
(43) Date of publication of application: **01.10.2025**
(21) Application number: 23895009.1
(22) Date of filing: 21.11.2023
(51) Int. Cl.: E02F 9/24, E02F 9/26, G06T 11/60, G06T 7/11, G08B 3/10, H04N 13/282, G01S 17/06, G01S 17/931, G06F 3/0484, G06F 3/0481

(54) **REAR SAFETY SYSTEM FOR CONSTRUCTION EQUIPMENT**

(30) Priority: 24.11.2022 KR 20220159815
(71) Applicant: HD Hyundai Construction Equipment Co., Ltd., Seongnam-si, Gyeonggi-do 13553 (KR)
(72) Inventor: KIM, Yong Hwi, Seongnam-si, Gyeonggi-do 13553 (KR); KIM, In Tae, Seongnam-si, Gyeonggi-do 13553 (KR); KIM, Young Bum, Seongnam-si, Gyeonggi-do 13553 (KR); CHO, Beom Soo, Seongnam-si, Gyeonggi-do 13553 (KR)
(74) Representative: Betten & Resch
(86) International application number: PCT/KR2023/018820
(87) International publication number: WO 2024/112082

(57) **Abstract**

A rear safety system of construction equipment includes a camera obtaining image information of rear of construction equipment, a steering angle sensor installed on a rotating shaft between a front frame and a rear frame of the construction equipment and measuring a steering angle to obtain steering angle information, a radar detecting a position and a speed of each of a plurality of objects present at the rear of the construction equipment to obtain object position information and object speed information, a monitor imaging the image information, the steering angle information, the object position information, and the object speed information, and a controller controlling the camera, the steering angle sensor, the radar, and the monitor. The controller controls a rear image of the construction equipment to be displayed on the monitor based on the image information, controls a region of interest according to a rear movement trajectory of the construction equipment to be displayed on the monitor based on the steering angle information, controls the position of each of the plurality of objects to be displayed on the monitor based on the object position information, and controls a moving direction of each of the plurality of objects to be displayed on the monitor based on the object speed information.

## Description

### [Technical Field]

The present invention relates to a rear safety system of construction equipment.

### [Background Art]

In general, construction equipment refers to construction civil engineering machinery, which has a mechanical structure and performance suitable for characteristics of each construction, such as roads, rivers, ports, railways, and plants. In other words, construction equipment may be classified into excavation equipment, loading equipment, transportation equipment, loading and unloading equipment, compaction equipment, basic construction equipment, or the like, due to the diversity of work performed at industrial sites, and specifically, the construction equipment includes many types of equipment such as wheel loaders, bulldozers, excavators, dump trucks, rollers, forklifts, or the like.

Such construction equipment may be equipped with cameras on the front, side, and/or rear to prevent safety accidents. Images taken by the cameras are output on a monitor provided in a driver's cab to assist a driver in performing the work while checking the obstacles in the blind spot.

In this way, however, when the rear is detected only by the rear camera, it is difficult for the driver to accurately predict the trajectory in which the construction equipment moves, and the visibility of objects (e.g., equipment used for work, workpieces, workers, or the like) present in the trajectory is poor, which may lead to safety accidents.

In particular, unlike general automobiles, construction equipment repeats forward and backward movement due to the working environment and work characteristics, and inevitably has a large rear blind spot due to the characteristics of the vehicle body, thereby increasing the driver's fatigue when moving backward.

Accordingly, there is a need to develop a system which allows drivers to easily recognize information about objects which are present at the rear of construction equipment when moving backward.

### [Disclosure]

### [Technical Problem]

The present disclosure has been created to solve the above-mentioned problems of the prior art, and various embodiments of the present disclosure are directed to a rear safety system of construction equipment which enables a driver to easily recognize information on an object present in the rear when the construction equipment moves backward.

### [Technical Solution]

A rear safety system of construction equipment according to an aspect of the present disclosure includes a camera obtaining image information of rear of construction equipment, a steering angle sensor installed on a rotating shaft between a front frame and a rear frame of the construction equipment and measuring a steering angle to obtain steering angle information, a radar detecting a position and a speed of each of a plurality of objects present at the rear of the construction equipment to obtain object position information and object speed information, a monitor imaging the image information, the steering angle information, the object position information, and the object speed information, and a controller controlling the camera, the steering angle sensor, the radar, and the monitor. The controller controls a rear image of the construction equipment to be displayed on the monitor based on the image information, controls a region of interest according to a rear movement trajectory of the construction equipment to be displayed on the monitor based on the steering angle information, controls the position of each of the plurality of objects to be displayed on the monitor based on the object position information, and controls a moving direction of each of the plurality of objects to be displayed on the monitor based on the object speed information.

For example, the rear safety system may further include a relay drive unit and a speaker making the object position information in a form of an alarm. The controller may control the speaker to be in a turn-on state using the relay drive unit and to generate a warning sound when at least one object is present in the region of interest among the plurality of objects based on the object position information.

For example, the steering angle sensor may transmit the steering angle information to the radar and the controller through Controller Area Network (CAN) communication.

For example, the radar may be a wide-angle radar with a horizontal field of view of 180 degrees. After receiving the steering angle information, when at least one object is present in the region of interest among the plurality of objects, the radar may select only a predetermined number of objects having a high risk priority from among the at least one object in the region of interest and may transmit the object position information and the object speed information for each of the predetermined number of objects to the controller. After receiving the object position information and the object speed information for each of the predetermined number of objects from the radar, the controller may cause the monitor to display the object position information and the object speed information.

For example, the controller may execute a region of interest setting algorithm for a case where the steering angle of the construction equipment is 0 degrees and for a case where the steering angle of the construction equipment is not 0 degrees, thereby distinguishing whether an object in the region of interest is present in a danger region or a warning region.

For example, the controller may use a radar reference coordinate system in the case where the steering angle of the construction equipment is 0 degrees based on the steering angle information. The controller may set radar position coordinates (0,0) and object position coordinates (x,y) in the radar reference coordinate system; a y value of a Y-axis coordinate to be greater than 0 (y>0) of the object position coordinates (x,y); and an x value of an X-axis coordinate between a value '-(N/2+M)' and a value '(N/2+M)' (-(N/2+M)≤x≤(N/2+M)) of the object position coordinates (x,y). The controller may determine that the object is present in the danger region when the y value is less than a value 'L1+(L-Q)' (y<L1+(L-Q)) under the setting conditions. The controller may determine that the object is present in the warning region when the y value is between the value 'L1+(L-Q)' and a value 'L1+L2+(L-Q)' (L1+(L-Q)≤y≤L1+L2+(L-Q)) under the setting conditions.

For example, the controller may determine that, the smaller the y value obtained from at least one object present in the warning region or the danger region among the plurality of objects, the higher a risk priority of the at least one object, may select a predetermined number of objects in order of objects having a smallest y value in order of the risk priority, and may cause information on the selected objects to be displayed on the monitor.

For example, the controller may use a radar reference coordinate system and a rotation center reference coordinate system in the case where the steering angle of the construction equipment is not 0 degrees based on the steering angle information. The controller may set radar position coordinates (0,0), object position coordinates (x,y), and rotation center coordinates (sR,-Q) in the radar reference coordinate system; radar position coordinates (-sR,Q), object position coordinates (x-sR,y+Q), and rotation center coordinates (0,0) in the rotation center reference coordinate system; a y value of a Y-axis coordinate to be greater than 0 (y>0) of the object position coordinates (x-sR,y+Q); and a value '(x-sR)2+(y+Q)2' between a value '(R-(N/2)-M)2' and a value '(R+(N/2)+M)2' ((R-(N/2)-M)2≤(x-sR)2+(y+Q)2≤(R+(N/2)+M)2) of the object position coordinates (x-sR,y+Q). The controller may determine that the object is present in the danger region when an azimuth between the object and a rear axle center line of rear wheels provided in the rear frame is less than or equal to a value 'a0+a1' (Φ≤a0+a1) under the setting conditions. The controller may determine that the object is present in the warning region when the object azimuth is greater than the value 'a0+a1' and less than a value 'a0+a1+a2' (a0+a1<Φ<a0+a1+a2) under the setting conditions.

For example, the controller may calculate the object azimuth by 'atan2(y+Q,x-sR)', when the steering angle is greater than 0 degrees in the object position coordinates (x-sR,y+Q), may calculate the object azimuth by 'π-atan2(y+Q,x-sR)' when the steering angle is less than 0 degrees in the object position coordinates (x-sR,y+Q), may determine that the smaller a value of the object azimuth obtained from at least one object present in the warning region or the danger region among the plurality of objects, the higher a risk priority of the at least one object, may select a predetermined number of objects in order of objects having a smallest value of the object azimuth in order of the risk priority, and may cause information on the selected objects to be displayed on the monitor.

For example, the controller may control the monitor to display the region of interest in a form of a curve in which the rotation radius is kept constant with respect to the rotation center coordinates to match the rear movement trajectory of the construction equipment, when the steering angle is greater than or less than 0 degrees. The rotation radius may change according to a change in the steering angle.

For example, the controller may control the monitor to display the position of each of the plurality of objects based on the object position information and may control at least one object present in the region of interest among the plurality of objects to blink on the monitor.

For example, the controller may control at least one of the image information, the steering angle information, the object position information, or the object speed information to be displayed on the monitor through a graphical user interface (GUI).

### [Advantageous Effects]

A rear safety system of construction equipment in accordance with one or more embodiments of the present disclosure is configured to accurately display a region of interest (ROI) according to a rear movement trajectory of the construction equipment on a monitor in a curve which matches the rear movement trajectory, and display position information of an object present in the ROI on the monitor through a graphical user interface (GUI), so that a driver may be informed of the danger to the object in the movement trajectory of the construction equipment, thereby ensuring minimum safety during work.

In addition, the rear safety system of the construction equipment in accordance with one or more embodiments of the present disclosure is configured to display speed information of the object present in the ROI on the monitor through the GUI at the same time as the position information of the object, so that the degree of danger to the object may be effectively notified to the driver, thereby further ensuring safety during work

### [Description of Drawings]

FIG. 1 is a block diagram of a rear safety system according to an embodiment of the present disclosure;
FIG. 2 is a diagram illustrating a region of interest (ROI) setting algorithm when a steering angle of construction equipment equipped with a rear safety system according to an embodiment of the present disclosure is 0 degrees;
FIG. 3 is a diagram illustrating a ROI setting algorithm when a steering angle of construction equipment equipped with a rear safety system according to an embodiment of the present disclosure is not 0 degrees;
FIG. 4 is a diagram illustrating a detection region of each of a camera and a radar in a rear safety system according to an embodiment of the present disclosure provided in construction equipment;
FIG. 5 is a diagram showing image information transmitted from a camera in a rear safety system according to an embodiment of the present disclosure provided in construction equipment, which is variously displayed on a monitor through a graphical user interface (GUI);
FIG. 6 is a diagram showing image information transmitted from a camera and position information of an object transmitted from a radar in a rear safety system according to an embodiment of the present disclosure provided in construction equipment, which are displayed on a monitor through a GUI;
FIG. 7 is a diagram showing image information transmitted from a camera and position information and speed information of an object transmitted from a radar in a rear safety system according to an embodiment of the present disclosure provided in construction equipment, which are displayed on a monitor through a GUI;
FIG. 8 is a diagram illustrating that a case where a steering angle of construction equipment equipped with a rear safety system according to an embodiment of the present disclosure is 0 degrees and a case where the steering angle is not 0 degrees are displayed on a monitor through a speed GUI; and
FIG. 9 is a diagram illustrating a driver setting GUI in a rear safety system according to an embodiment of the present disclosure provided in construction equipment.

### [Modes of the Invention]

The object, particular advantages, and novel features of the present disclosure will become more apparent from the following detailed description and embodiments, which are in connection with accompanying drawings. It should be noted that, in the specification, reference numerals are added to components in each drawing, so that the same components have the same numerals as much as possible, even if they are shown in different drawings. In addition, in describing the present disclosure, if it is determined that a specific description of the related known art may unnecessarily obscure the gist of the present disclosure, a detailed description thereof will be omitted.

Hereinafter, embodiments of the present disclosure will be described in detail with reference to the accompanying drawings.

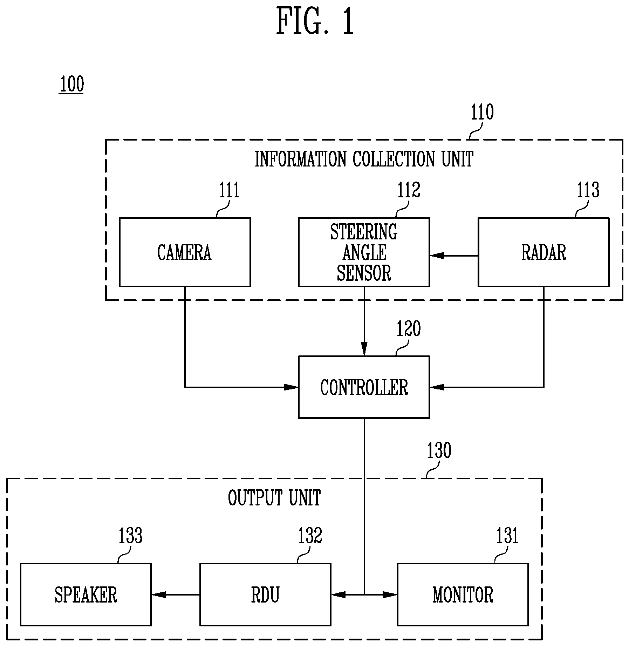

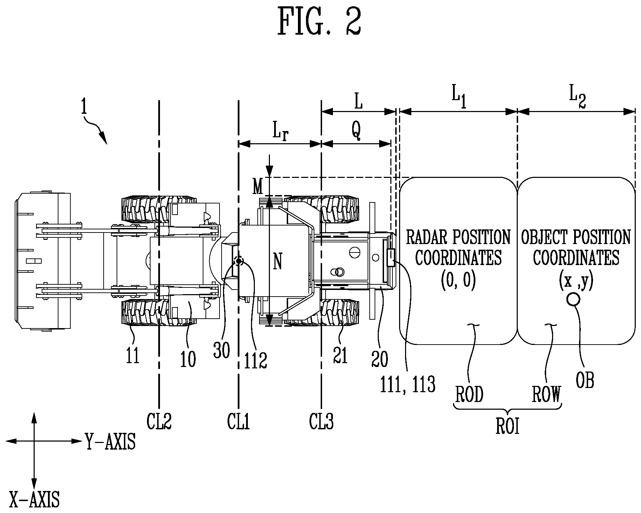

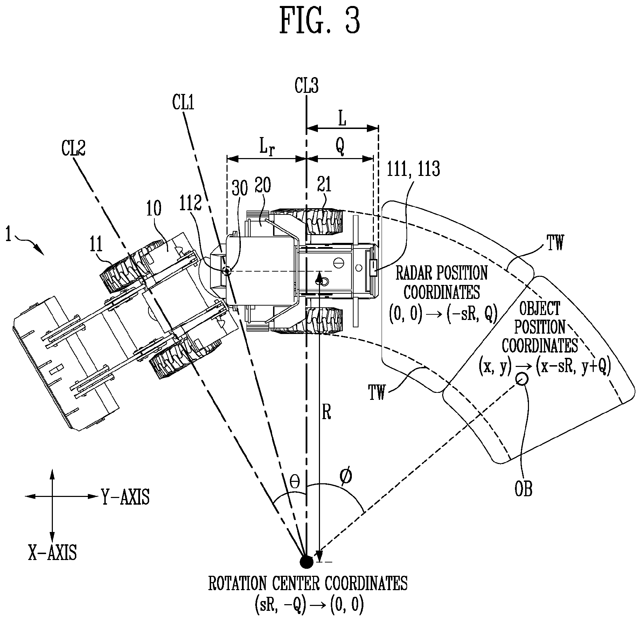

FIG. 1 is a block diagram of a rear safety system according to an embodiment of the present disclosure; FIG. 2 is a diagram illustrating a region of interest (ROI) setting algorithm when a steering angle of construction equipment equipped with a rear safety system according to an embodiment of the present disclosure is 0 degrees; and FIG. 3 is a diagram illustrating a ROI setting algorithm when a steering angle of construction equipment equipped with a rear safety system according to an embodiment of the present disclosure is not 0 degrees.

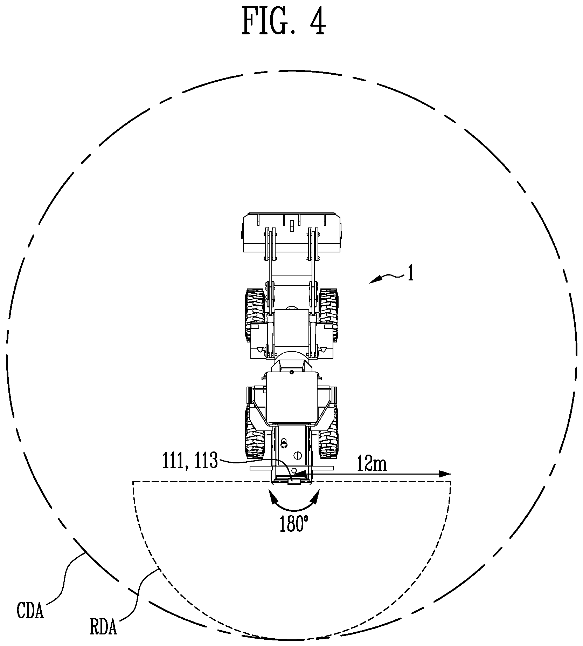

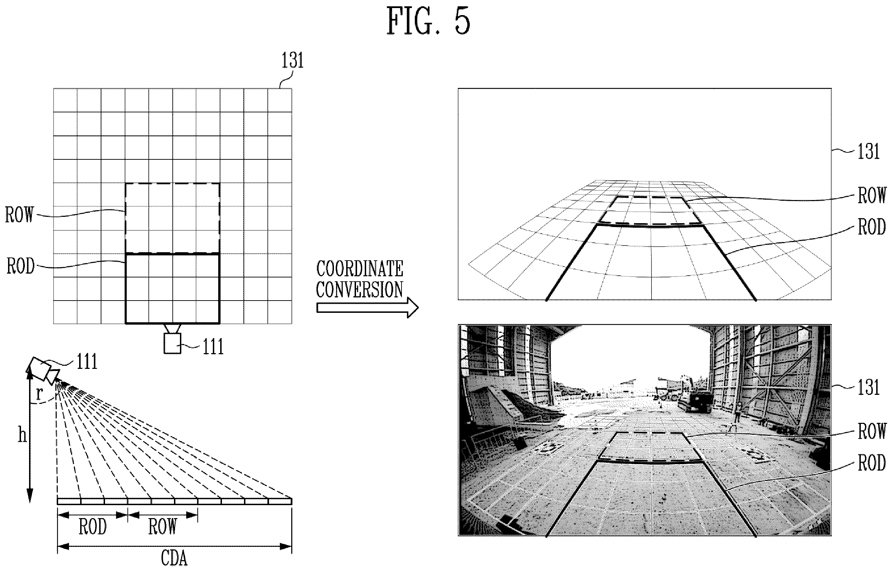

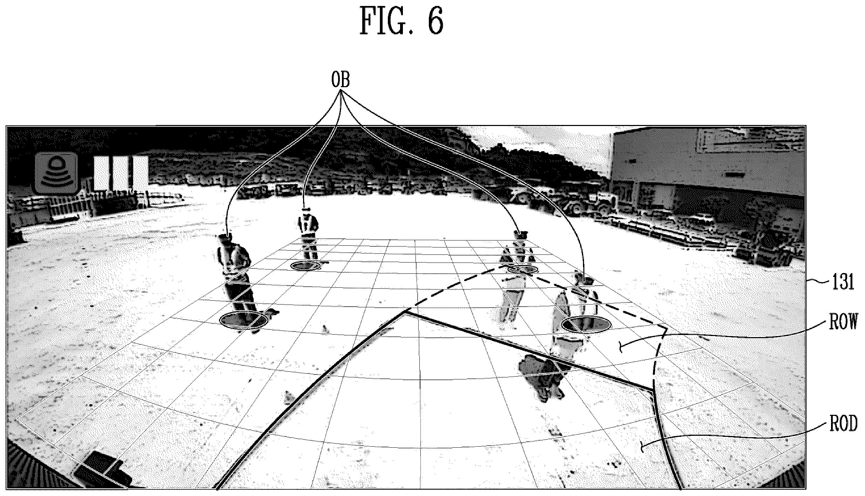

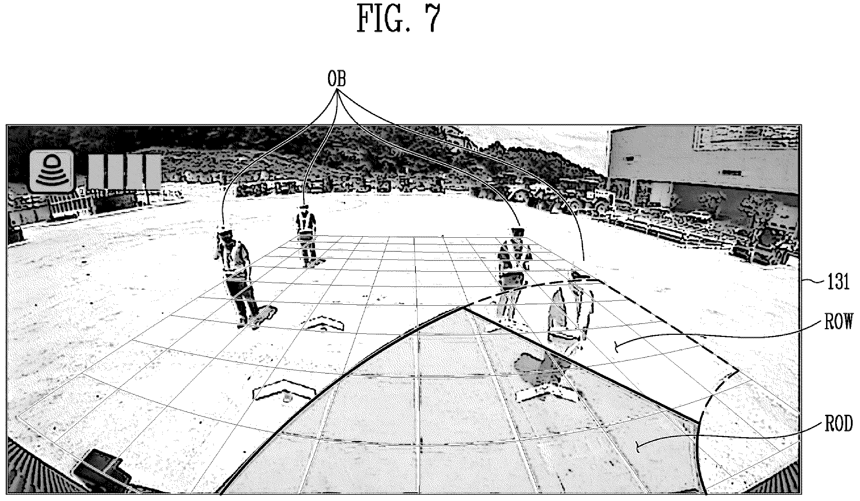

In addition, FIG. 4 is a diagram illustrating a detection region of each of a camera and a radar in a rear safety system according to an embodiment of the present disclosure provided in construction equipment; FIG. 5 is a diagram showing image information transmitted from a camera in a rear safety system according to an embodiment of the present disclosure provided in construction equipment which is variously displayed on a monitor through a GUI; FIG. 6 is a diagram showing image information transmitted from a camera and position information of an object transmitted from a radar in a rear safety system according to an embodiment of the present disclosure provided in construction equipment, which are displayed on a monitor through a GUI; and FIG. 7 is a diagram showing image information transmitted from a camera and position information and speed information of an object transmitted from a radar in a rear safety system according to an embodiment of the present disclosure provided in construction equipment, which are displayed on a monitor through a GUI.

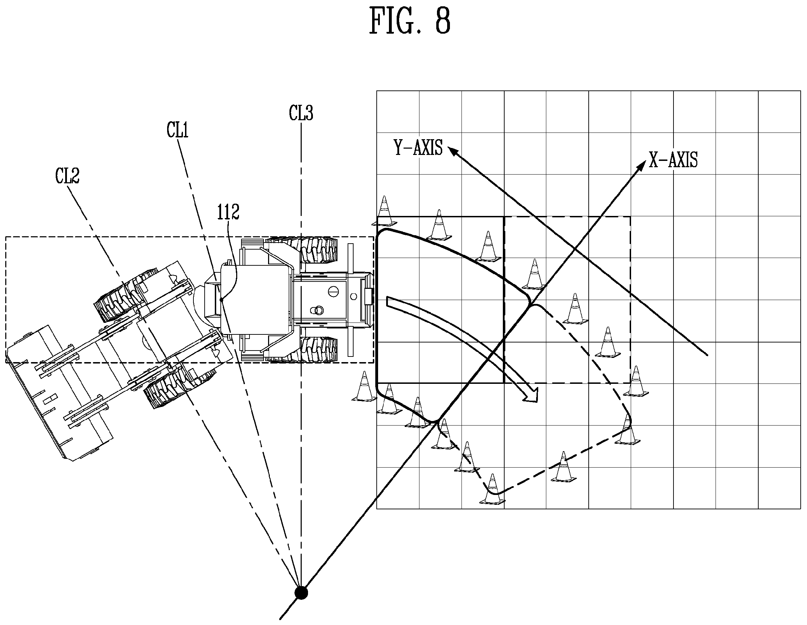

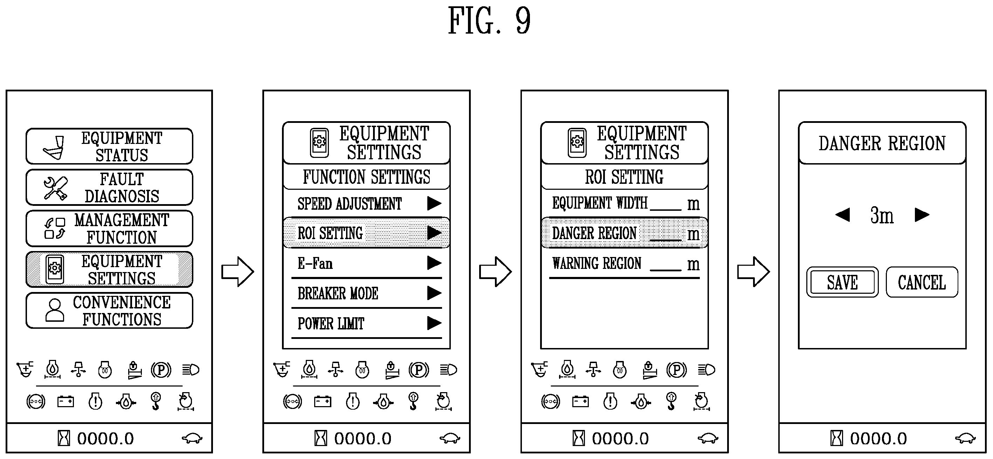

In addition, FIG. 8 is a diagram illustrating that a case where a steering angle of construction equipment equipped with a rear safety system according to an embodiment of the present disclosure is 0 degrees and a case where the steering angle is not 0 degrees are displayed on a monitor through a speed GUI; and FIG. 9 is a diagram illustrating a driver setting GUI in a rear safety system according to an embodiment of the present disclosure provided in construction equipment.

Referring to FIGS. 1 to 3, a rear safety system 100 according to an embodiment of the present disclosure may include an information collection unit 110, a controller 120, and an output unit 130, and may be applied to construction equipment 1.

As shown in FIG. 2 and FIG. 3, the construction equipment 1 to which the rear safety system 100 of the present disclosure is applied may be a wheel loader including a front frame 10 in which a working device such as a bucket and a boom is provided and front wheels 11 are provided, a rear frame 20 in which a driving device is mounted and a cab, a counterweight, an engine, and the like are provided and rear wheels 21 are provided, and a rotating shaft 30 provided between the front frame 10 and the rear frame 20 and capable of articulated steering.

Although this embodiment describes a case where the construction equipment 1 to which the rear safety system 100 is applied is a wheel loader which employs refracting steering, it goes without saying that the rear safety system 100 of the present disclosure may be applied not only to various equipment which employs refractive steering but also to equipment or vehicles which do not employ refracting steering.

The information collection unit 110 may collect information on the steering and surrounding situations of the construction equipment 1 and transmit the information to the controller 120, and may include a camera 111, a steering angle sensor 112, and a radar 113.

At least one camera 111 may be installed in the rear frame 20 of the construction equipment 1.

The camera 111 may be installed at the rear end of the rear frame 20 to photograph the rear of the construction equipment 1, obtain information of the photographed rear image, and transmit the image information to the controller 120 in real time.

The camera 111 may be an Analog High Definition (AHD) camera, and a camera detection region CDA may be 360 degrees as shown in FIG. 4.

The steering angle sensor 112 may be installed on the rotating shaft 30 between the front frame 10 and the rear frame 20 of the construction equipment 1.

The steering angle sensor 112 may measure the steering angle when the construction equipment 1 rotates and moves, obtain information on the measured steering angle, and transmit the obtained steering angle information to the controller 120 through Controller Area Network (CAN) communication.

In addition, the steering angle sensor 112 may transmit the obtained steering angle information to the radar 113 in real time through CAN communication.

The radar 113 may be installed in the rear frame 20 of the construction equipment 1.

The radar 113 may be installed at the rear end of the rear frame 20 to detect a position and speed of each of a plurality of objects OB present at the rear of the construction equipment 1, obtain object position information and object speed information for each of the detected objects OB, and transmit the obtained pieces of information to the controller 120 in real time.

The radar 113 may be a wide-angle radar, and a radar detection region RDA may have a horizontal field of view of 180 degrees as shown in FIG. 4. By using the radar 113 which is a wide-angle radar, a blind area may be minimized or reduced and a region of interest ROI at the rear may be set accurately.

In addition, after receiving the steering angle information from the steering angle sensor 112, when at least one of the plurality of objects OB is present in the region of interest ROI, the radar 113 may select only a predetermined number of objects OB having a high risk priority from among the at least one object OB in the region of interest ROI, and transmit the object position information and the object speed information for each of the predetermined number of objects OB to the controller 120 in real time.

The controller 120 may receive the object position information and the object speed information for each of the predetermined number of objects OB from the radar 113, and may then cause a monitor 131 to display the corresponding information.

The predetermined number of objects OB may be set, but is not limited, to four according to a risk priority. The number of objects OB is limited according to the risk priority as described above because when too many objects OB are detected by the radar 113, information processing speed may be slowed because information on all the detected objects OB needs to be processed.

The controller 120 receives various information transmitted from the information collection unit 110, analyzes the information with a set algorithm, and then allows a driver and surrounding workers to know the surrounding situations of the construction equipment 1 through the output unit 130.

The controller 120 may control the camera 111, the steering angle sensor 112, the radar 113, and the monitor 131.

The controller 120 may control the rear image of the construction equipment 1 to be displayed on the monitor 131 based on the image information transmitted from the camera 111.

In addition, the controller 120 may control the region of interest ROI according to a rear movement trajectory TW of the construction equipment 1 to be displayed on the monitor 131 based on the steering angle information transmitted from the steering angle sensor 112.

In addition, the controller 120 may control a position of each of the plurality of objects OB to be displayed on the monitor 131 based on the object position information transmitted from the radar 113.

In addition, the controller 120 may control the monitor 131 to display the position of each of the plurality of objects OB based on the object position information transmitted from the radar 113, and may control at least one object OB present in the region of interest ROI among the plurality of objects OB to blink on the monitor 131, so that the driver may be visually notified of the presence or absence of the object OB in the region of interest ROI.

In addition, the controller 120 may control a moving direction of each of the plurality of objects OB to be displayed on the monitor 131 based on the object speed information transmitted from the radar 113.

In addition, when at least one of the plurality of objects OB is present in the region of interest ROI based on the object position information transmitted from the radar 113, the controller 120 may control a speaker 133 to be in a turn-on state using a relay drive unit (RDU) 132 to generate a warning sound.

In this embodiment, the controller 120 may control at least one of image information, steering angle information, object position information, or object speed information to be displayed on the monitor 131 through a graphical user interface (GUI).

The output unit 130 visualizes or audibilizes the information transmitted from the controller 120 to enable the driver and the surrounding workers to recognize the surrounding situations of the construction equipment 1. The output unit 130 may include the monitor 131, the RDU 132, and the speaker 133.

The monitor 131 may image the image information, the steering angle information, the object position information, and the object speed information, and may display such information through the GUI by the controller 120.

The RDU 132 and the speaker 133 may make the object position information in the form of an alarm.

When at least one of the plurality of objects OB is present in the region of interest ROI based on the object position information, the relay drive unit 132 causes the speaker 133 to be in the turn-on state, and the speaker 133 generates a warning sound to audibly inform the driver and the surrounding workers of the presence or absence of the object OB in the region of interest ROI.

In the rear safety system 100 configured as described above, the controller 120 executes a ROI setting algorithm for the case where the steering angle of the construction equipment 1 is 0 degrees as the construction equipment 1 moves backward in a straight line and the case where the steering angle of the construction equipment 1 is not 0 degrees as the construction equipment 1 moves backward in a curved line, thereby distinguishing whether the object OB in the region of interest ROI is present in a danger region ROD or a warning region ROW, which will be described in detail below.

When the steering angle of the construction equipment 1 is 0 degrees based on the steering angle information, the controller 120 executes the ROI setting algorithm using a radar reference coordinate system, which will be described with reference to FIG. 2.

The controller 120 sets radar position coordinates (0,0) and object position coordinates (x,y) in the radar reference coordinate system, sets a y value of a Y-axis coordinate to be greater than 0 (y>0) of the object position coordinates (x,y), and sets an x value of an X-axis coordinate between the value '-(N/2+M)' and the value '(N/2+M)' (-(N/2+M)≤x≤(N/2+M)) of the object position coordinates (x,y).

In the above descriptions, the 'X-axis' is the left-right direction of the construction equipment 1, the 'Y-axis' is the front-rear direction of the construction equipment 1, 'N' is the vehicle width of the rear frame 20, and 'M' is the vehicle-width margin of the rear frame 20.

The controller 120 determines that the object OB is present in the danger region ROD when the y value is less than the value 'L1+(L-Q)' (y<L1+(L-Q)) under the above-described setting conditions.

In the above descriptions, 'L' is the distance from a rear axle connecting the rear wheels 21 provided in the rear frame 20 to the rear end of the rear frame 20, 'L1' is the distance of the danger region ROD, and 'L2' is the distance of the warning region ROW.

In addition, the controller 120 determines that the object OB is present in the warning region ROW when the y value is between the value 'L1+(L-Q)' and the value 'L1+L2+(L-Q)' (L1+(L-Q)≤y≤L1+L2+(L-Q)) under the above-described setting conditions.

In the above descriptions, 'Q' is the distance from the rear axle to the radar 113.

According to the algorithm as described above, the controller 120 determines that the smaller the y value obtained from at least one object OB present in the warning region ROW or the danger region ROD among the plurality of objects OB, the higher the risk priority of the object OB. The controller 120 may select a predetermined number of objects OB in the order of objects OB having the smallest y value in the order of the risk priority, and cause information on the selected objects OB to be displayed on the monitor 131. As described above, when the controller 120 selects the predetermined number of objects OB, the above-described selection of the predetermined number of objects OB by the radar 113 may be omitted. The predetermined number of objects OB may be set to four according to the risk priority as described above, but is not limited thereto.

In addition, the controller 120 executes the ROI setting algorithm using the radar reference coordinate system and a rotation center reference coordinate system when the steering angle of the construction equipment 1 is not 0 degrees (including when the steering angle is greater than or less than 0 degrees) based on the steering angle information, which will be described with reference to FIG. 3.

The controller 120 sets radar position coordinates (0,0), object position coordinates (x,y), and rotation center coordinates (sR,-Q) in the radar reference coordinate system, sets radar position coordinates (-sR,Q), object position coordinates (x-sR,y+Q), and rotation center coordinates (0,0) in the rotation center reference coordinate system, sets the y value of the Y-axis coordinate to be greater than 0 (y>0) of the object position coordinates (x-sR,y+Q), and sets the value '(x-sR)2+(y+Q)2' of the object position coordinates (x-sR,y+Q) to be between a value '(R-(N/2)-M)2' and a value '(R+(N/2)+M)2' ((R-(N/2)-M)2≤(x-sR)2+(y+Q)2≤(R+(N/2)+M)2).

In the above descriptions, 's' is the sign of the steering angle, and when the steering angle is greater than 0 degrees, 's=-1' is indicated, and when the steering angle is less than 0 degrees, 's=+1' is indicated.

In addition, 'R' is the rotation radius, which is the distance from the rotation center coordinates to the center of the rear frame 20. The rotation radius 'R' is calculated by 'Lr/|tan(θ/2)|', where 'Lr' is the distance from a rotation center line CL1, which connects the rotation center coordinates and the rotating shaft 30, to a rear axle center line CL3, and 'θ' is the steering angle, which is the angle between a front axle center line CL2 and the rear axle center line CL3 with respect to the rotation center coordinates.

Furthermore, the 'Y-axis' is the front-rear direction of the construction equipment 1, 'N' is the vehicle width of the rear frame 20, 'M' is the vehicle-width margin of the rear frame 20, and 'Q' is the distance from the rear axle to the radar 113.

When an azimuth between the object OB and the rear axle center line CL3 of the rear wheels 21 provided in the rear frame 20 is less than or equal to the value 'a0+a1' (Φ≤a0+a1) under the above-described setting conditions, the controller 120 determines that the object OB is present in the danger region ROD.

In addition, when the object azimuth is greater than the value 'a0+a1' and less than the value 'a0+a1+a2' (a0+a1<Φ≤a0+a1+a2) under the above-described setting conditions, the controller 120 determines that the object OB is present in the warning region ROW.

In the above descriptions, 'Φ' is the object azimuth, which is an angle between the rear axle center line CL3 and the object OB with respect to the rotation center coordinates.

Also, 'a0' is calculated by 'atan2(L,R)', 'a1' is calculated by '(L1/R)', and 'a2' is calculated by '(L2/R)', where 'L' is the distance from the rear axle connecting the rear wheels 21 provided in the rear frame 20 to the rear end of the rear frame 20, 'L1' is the distance of the danger region ROD, and 'L2' is the distance of the warning region ROW.

According to the algorithm as described above, the controller 120 calculates the object azimuth by 'atan2(y+Q,x-sR)' when the steering angle is greater than 0 degrees in the object position coordinates (x-sR,y+Q), and calculates the object azimuth by 'π-atan2(y+Q,x-sR)' when the steering angle is less than 0 degrees in the object position coordinates (x-sR,y+Q). The controller 120 determines that the smaller the value of the object azimuth obtained from at least one object OB present in the warning region ROW or the danger region ROD among the plurality of objects OB, the higher the risk priority of the object OB. The controller 120 may select a predetermined number of objects OB in the order of objects OB having the smallest value of the object azimuth in the order of the risk priority, and cause information on the selected objects OB to be displayed on the monitor 131. As described above, when the controller 120 selects the predetermined number of objects OB, the above-described selection of the predetermined number of objects OB by the radar 113 may be omitted. The predetermined number of objects OB may be set to four according to the risk priority as described above, but is not limited thereto.

When the steering angle is greater than or less than 0 degrees, the controller 120 may control the monitor 131 to display the region of interest ROI in the form of a curve in which the rotation radius is kept constant with respect to the rotation center coordinates to match the rear movement trajectory TW of the construction equipment 1 by the above-described algorithm. The rotation radius changes according to the change in the steering angle.

In addition, as shown in FIG. 5, the controller 120 may control the image information transmitted from the camera 111 to be variously displayed on the monitor 131 through the GUI. That is, the controller 120 may cause information on the image photographed by the camera 111 to be displayed in pixel coordinates on the monitor 131, or may calculate the installation angle of the camera 111 and the curvature of the lens to convert the pixel coordinates into world coordinates and cause the world coordinates to be displayed on the monitor 131.

After receiving information about the steering angle of the construction equipment 1 from the steering angle sensor 112, the controller 120 may cause the monitor 131 to display the region of interest ROI, for example, to display a region up to 3 meters from the construction equipment 1 with respect to the Y-axis as the danger region ROD, and to display a region up to 3 meters further from the danger region ROD as the warning region ROW. The X-axis may be represented as 4 meters. It goes without saying that the region of interest ROI may be set separately by the user because the optimal setting varies depending on the model of the construction equipment 1 and the working environment.

In addition, as shown in FIG. 6, the controller 120 may cause the image information transmitted from the camera 111 and the position information of the object OB transmitted from the radar 113 to be displayed on the monitor 131 through the GUI.

The controller 120 causes the monitor 131 to display not only the position information of the object OB but also the speed information of the object OB as shown in FIG. 7, so that the object OB is displayed through a GUI to let the driver know whether the object OB moves away from or close to the construction equipment 1 or does not move.

For example, when the steering angle is 0 degrees, a speed GUI may display '^' when a value of the Y-axis coordinate increases, 'v' when the value of the Y-axis coordinate decreases, and '-' when the value of the Y-axis coordinate remains the same.

In addition, when the steering angle is not 0 degrees, according to vector components shown in FIG. 8, the speed GUI may display '^' when the vector component in the Y-axis direction increases, 'v' when the vector component in the Y-axis direction decreases, and '-' when the vector component in the Y-axis direction remains the same.

In the rear safety system 100 of the present disclosure, the vehicle width of the construction equipment 1, the distance of the danger region ROD, and the distance of the warning region ROW may vary depending on the model of the construction equipment 1 and the working environment, so that the driver may set corresponding parameters through a cluster as shown in FIG. 9.

The vehicle width, the danger region ROD, and the warning region ROW of the construction equipment 1 have minimum and maximum ranges, and the driver may set the vehicle width, the danger region ROD, and the warning region ROW in units of 1 meter within the ranges.

Although the present disclosure has been described above with reference to embodiments of the present disclosure, such embodiments are merely illustrative and not restrictive, and those skilled in the art will recognize that various combinations, modifications, and applications not illustrated in the embodiments are possible without departing from the essential technical contents of the embodiments. Therefore, the technical contents related to modifications and applications that may be easily derived from the embodiments of the present disclosure should be interpreted as being included in the present disclosure.

## Claims

1. A rear safety system, comprising:
a camera obtaining image information of rear of construction equipment;
a steering angle sensor installed on a rotating shaft between a front frame and a rear frame of the construction equipment and measuring a steering angle to obtain steering angle information;
a radar detecting a position and a speed of each of a plurality of objects present at the rear of the construction equipment to obtain object position information and object speed information;
a monitor imaging the image information, the steering angle information, the object position information, and the object speed information; and
a controller controlling the camera, the steering angle sensor, the radar, and the monitor,
wherein the controller controls:
a rear image of the construction equipment to be displayed on the monitor based on the image information;
a region of interest according to a rear movement trajectory of the construction equipment to be displayed on the monitor based on the steering angle information; and
the position of each of the plurality of objects to be displayed on the monitor based on the object position information; and
a moving direction of each of the plurality of objects to be displayed on the monitor based on the object speed information.

2. The rear safety system of claim 1, further comprising a relay drive unit and a speaker making the object position information in a form of an alarm,
wherein the controller controls the speaker to be in a turn-on state using the relay drive unit and to generate a warning sound when at least one object is present in the region of interest among the plurality of objects based on the object position information.

3. The rear safety system of claim 1, wherein the steering angle sensor transmits the steering angle information to the radar and the controller through Controller Area Network (CAN) communication.

4. The rear safety system of claim 1, wherein the radar is a wide-angle radar with a horizontal field of view of 180 degrees,
wherein, after receiving the steering angle information, when at least one object is present in the region of interest among the plurality of objects, the radar selects only a predetermined number of objects having a high risk priority from among the at least one object in the region of interest and transmits the object position information and the object speed information for each of the predetermined number of objects to the controller, and
wherein, after receiving the object position information and the object speed information for each of the predetermined number of objects from the radar, the controller causes the monitor to display the object position information and the object speed information.

5. The rear safety system of claim 1, wherein the controller executes a region of interest setting algorithm for a case where the steering angle of the construction equipment is 0 degrees and for a case where the steering angle of the construction equipment is not 0 degrees, thereby distinguishing whether an object in the region of interest is present in a danger region or a warning region.

6. The rear safety system of claim 5, wherein the controller uses a radar reference coordinate system in the case where the steering angle of the construction equipment is 0 degrees based on the steering angle information,
wherein the controller sets:
radar position coordinates (0,0) and object position coordinates (x,y) in the radar reference coordinate system;
a y value of a Y-axis coordinate to be greater than 0 (y>0) of the object position coordinates (x,y); and
an x value of an X-axis coordinate between a value '-(N/2+M)' and a value '(N/2+M)' (-(N/2+M)≤x≤(N/2+M)) of the object position coordinates (x,y),
wherein the controller determines that the object is present in the danger region when the y value is less than a value 'L1+(L-Q), (y<L1+(L-Q)) under the setting conditions, and
wherein the controller determines that the object is present in the warning region when the y value is between the value 'L1+(L-Q)' and a value 'L1+L2+(L-Q)' (L1+(L-Q)≤y≤L1+L2+(L-Q)) under the setting conditions.
(In the above descriptions, the 'X-axis' is a left-right direction of the construction equipment, the 'Y-axis' is a front-rear direction of the construction equipment, 'N' is a vehicle width of the rear frame, 'M' is a vehicle-width margin of the rear frame, 'L' is a distance from a rear axle connecting rear wheels provided in the rear frame to a rear end of the rear frame, 'L1' is a distance of the danger region, 'L2' is a distance of the warning region, and 'Q' is a distance from the rear axle to the radar.)

7. The rear safety system of claim 6, wherein the controller:
determines that, the smaller the y value obtained from at least one object present in the warning region or the danger region among the plurality of objects, the higher a risk priority of the at least one object;
selects a predetermined number of objects in order of objects having a smallest y value in order of the risk priority; and
causes information on the selected objects to be displayed on the monitor.

8. The rear safety system of claim 5, wherein the controller uses a radar reference coordinate system and a rotation center reference coordinate system in the case where the steering angle of the construction equipment is not 0 degrees based on the steering angle information,
wherein the controller sets:
radar position coordinates (0,0), object position coordinates (x,y), and rotation center coordinates (sR,-Q) in the radar reference coordinate system;
radar position coordinates (-sR,Q), object position coordinates (x-sR,y+Q), and rotation center coordinates (0,0) in the rotation center reference coordinate system;
a y value of a Y-axis coordinate to be greater than 0 (y>0) of the object position coordinates (x-sR,y+Q); and
a value '(x-sR)2+(y+Q)2' between a value '(R-(N/2)-M)2' and a value '(R+(N/2)+M)2' ((R-(N/2)-M)2≤(x-sR)2+(y+Q)2≤(R+(N/2)+M)2) of the object position coordinates (x-sR,y+Q),
wherein the controller determines that the object is present in the danger region when an azimuth between the object and a rear axle center line of rear wheels provided in the rear frame is less than or equal to a value 'a0+a1' (Φ≤a0+a1) under the setting conditions, and
wherein the controller determines that the object is present in the warning region when the object azimuth is greater than the value 'a0+a1' and less than a value 'a0+a1+a2' (a0+a1<Φ<a0+a1+a2) under the setting conditions.
(In the above descriptions, 's' is a sign of the steering angle, and when the steering angle is greater than 0 degrees, 's=-1' is indicated, and when the steering angle is less than 0 degrees, 's=+1' is indicated, 'R' is a rotation radius, which is a distance from the rotation center coordinates to a center of the rear frame, and is calculated by 'Lr/|tan(θ/2)|', where 'Lr' is a distance from a rotation center line, which connects the rotation center coordinates and the rotating shaft, to a rear axle center line, and 'θ' is the steering angle, which is an angle between a front axle center line and a rear axle center line with respect to the rotation center coordinates. In addition, the 'Y-axis' is a front-rear direction of the construction equipment, 'N' is a vehicle width of the rear frame, 'M' is a vehicle-width margin of the rear frame, 'Q' is a distance from a rear axle to the radar, and 'Φ' is the object azimuth, which is an angle between the rear axle center line and the object with respect to the rotation center coordinates. Furthermore, 'a0' is calculated by 'atan2(L,R)', 'a1' is calculated by '(L1/R)', and 'a2' is calculated by '(L2/R)', where 'L' is a distance from the rear axle connecting the rear wheels provided in the rear frame to a rear end of the rear frame, 'L1' is a distance of the danger region, and 'L2' is a distance of the warning region.)

9. The rear safety system of claim 8, wherein the controller:
calculates the object azimuth by 'atan2(y+Q,x-sR)', when the steering angle is greater than 0 degrees in the object position coordinates (x-sR,y+Q);
calculates the object azimuth by 'π-atan2(y+Q,x-sR)' when the steering angle is less than 0 degrees in the object position coordinates (x-sR,y+Q);
determines that the smaller a value of the object azimuth obtained from at least one object present in the warning region or the danger region among the plurality of objects, the higher a risk priority of the at least one object;
selects a predetermined number of objects in order of objects having a smallest value of the object azimuth in order of the risk priority; and
causes information on the selected objects to be displayed on the monitor.

10. The rear safety system of claim 9, wherein the controller controls the monitor to display the region of interest in a form of a curve in which the rotation radius is kept constant with respect to the rotation center coordinates to match the rear movement trajectory of the construction equipment, when the steering angle is greater than or less than 0 degrees, and
wherein the rotation radius changes according to a change in the steering angle.

11. The rear safety system of claim 1, wherein the controller controls the monitor to display the position of each of the plurality of objects based on the object position information, and controls at least one object present in the region of interest among the plurality of objects to blink on the monitor.

12. The rear safety system of claim 1, wherein the controller controls at least one of the image information, the steering angle information, the object position information, or the object speed information to be displayed on the monitor through a graphical user interface (GUI).
